# EUROPEAN PATENT SPECIFICATION

(11) **EP 1 625 645 B1**
(45) Date of publication and mention of the grant of the patent: **22.06.2011**
(21) Application number: 04728308.0
(22) Date of filing: 20.04.2004
(51) Int. Cl.: H02G 3/00

(54) **MODULAR WIRING SYSTEM**
MODULARES VERDRAHTUNGSSYSTEM
SYSTEME DE CABLAGE MODULAIRE

(30) Priority: 09.05.2003 US 434697
(43) Date of publication of application: 15.02.2006
(73) Proprietor: Electec Limited, Kanata, Ontario K2S 1B9 (CA)
(72) Inventor: HYDE, Douglas, Ottawa, Ontario K2H 7Z1 (CA)
(74) Representative: Solf, Alexander
(86) International application number: PCT/CA2004/000595
(87) International publication number: WO 2004/100320

(56) References cited:
- WO-A-95/10871
- US-A- 5 272 277

## Description

### FIELD OF THE INVENTION

The present invention relates generally to wiring systems for buildings. More particularly, the present invention relates to wiring systems for interconnecting data signals between a patch panel and multiple user workstations.

### BACKGROUND OF THE INVENTION

Point-to-point wiring, also known as flood wiring, is a well known method for connecting data signal lines from a patch panel directly to each end user located in a cubicle or at a workstation. Installation of the wiring requires skilled personnel to prepare the wires for hardwiring, which involves tedious tasks such as insulation removal, wire end dressing, identification of individual wires, and terminator attachment, for example. Once wired, the configuration is effectively fixed for a given office environment layout because the wiring is set to specific lengths for connecting each cubicle or workstation to the patch panel. Therefore, any change in the layout requires time consuming re-distribution and preparation of the wiring.

Zone wiring provides a high degree of flexibility for the installation of data signal lines in office environments over point-to-point wiring arrangements. Zone wiring is used for connecting cubicles or workstations of a floor to the patch panel via zone boxes. In particular, zone wiring is well suited to modem open office environments where cubicle or workstation layouts can dynamically change to suit the needs of the users.

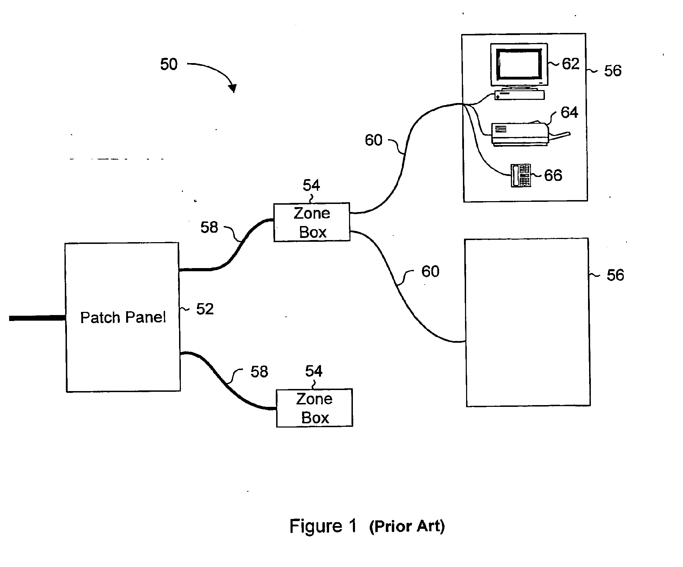

Figure 1 illustrates the generally existing zone wiring setup for connecting data signal lines to individual workstations or cubicles. The zone wiring system **50** includes a patch panel **52,** zone boxes **54,** workstation area **56,** patch cable group **58** and zone cable group **60.** Each workstation area **56** can include a networked computer **62,** printer **64** and telephone **66.** The patch panel **52** is the source of data for a predefined area, such as a floor, and distributes a number of data channels to each zone box **54** via respective patch cable group **58.** Each zone box **54** distributes its received data channels to a respective workstation area **56** within a specific area via respective zone cable groups **60.** Each patch cable group **58** and each zone cable group **60** includes a plurality of individual physical cables each adapted for carrying a data signal. Each such cable generally includes four twisted pair wires, shielding and an insulating sheath. The carried data signals can be computer network signals. Accordingly, a data channel includes a set of patch cables within patch cable group **58** or zone cables within zone cable group **60** for carrying all data signals for one user. It is readily understood by those skilled in the art that the patch cable group **58** and zone cable group **60** shown in Figure 1 each include a set of individual, shielded cables respectively including 4 twisted pairs. Thus, zone box **54** receives a plurality of individual patch cables and workstation area **56** receives a plurality of individual zone cables. Each such cable must be installed separately on site, generally by pulling the cable through the installation space in a suspended ceiling or under a raised floor. This requires a large amount of installation time. Running many individual also cables requires a large amount of installation space and makes it tremendously difficult to trace a single cable in the installation space for fault/problem detection. Furthermore, once the ends of the cables are to be connected to a patch panel, zone box or wall outlet, the respective ends of each cable must be identified to ensure correct wiring. Wire stripping and end connection is done on site for each end of each cable, which is associated with significant installer time. Because each zone box receives a number of data channels from the patch panel, the corresponding patch cables are physically grouped together in a patch cable group 58 after placement in the installation space or routed to their respective zone boxes **54.** In a similar manner, the individual zone cables corresponding to the same data channel can be physically grouped together and routed to their respective destination workstation areas **56.** The segmented nature of the wiring between the patch panel **52** and each workstation area **56** of the zone wiring configuration allows for re-arrangement of workstation layout in a particular zone without modification to the patch wiring **58.** In other words, only the zone wiring **60** of the affected zone needs to be modified.

Although zone wiring is easily adaptable to changes in the office layout with a minimal amount of effort, the wires still need to be prepared during their initial installation into the premises. Changes to an office layout after the initial installation may necessitate new wires to replace wires that are too short for the new layout. In both cases, skilled personnel are required on site to prepare the wires and correctly connect them to the appropriate cubicles. More specifically, the skilled person must identify wires belonging to a particular channel and identify specific types of data signal lines within the channel in order to install the appropriate wire terminals. The resulting group of patch wires for one zone box becomes a mass of wire terminals, such that the individual wire terminals belonging to different channels mesh together. Those of skill in the art will appreciate that connecting the wires of each channel to the corresponding connections in the patch panel or zone box is non-trivial, especially if all the terminals are similar in shape, resulting in potential erroneous connections. Hence the labour cost involved for connecting prior zone wiring systems is significant. Erroneous connections can also arise, requiring additional costs to correct.
[0005.1] U.S. Patent No. 5,272,277, issued December 21, 1993, discloses a telecommunication wiring system that uses a series of cables to connect a patch panel to workstations. The wiring system requires different cables types, e.g., a patch panel cable 18, a piping assembly cable 26 and an extractor cable 32, This tends to complicate the setup of the wiring system and to incur greater costs due to the diversity of cables required.

It is, therefore, desirable to provide a low cost wiring system that is simple to install while minimizing the possibility of erroneous connections.

### SUMMARY OF THE INVENTION

It is an object of the present invention to obviate or mitigate at least one disadvantage of previous office wiring systems. In particular, it is an object of the present invention to provide a modular terminal wiring system.

In a first aspect, the present invention provides a building zone wiring system for providing a data connection between a patch panel having a data channel and a workstation. The wiring system includes a first cable for connecting the data channel with a node, the cable having a first male compound connector for plugging into the patch panel and a first female compound connector for location at the node. The wiring system further includes a second cable for continuing the data channel from the node to the workstation, the cable having a second male compound connector configured identical to the first male compound connector and for plugging into the first female compound connector, and a second female compound connector identically configured to the first female compound connector for location at the workstation.

In embodiments of the present aspect, the second female compound connector is housed in a cable grommet for securing the second female compound connector in a structure, and the data channel includes three communication signals. In a further aspect of the present embodiment, the first male compound connector and the second male compound connector include three plugs, where each plug receives a respective communication signal, and the first female compound connector and the second female compound connector include three outlets, where each outlet is coupled to a corresponding plug. The plugs of the first male compound connector and the second male compound connector, and the outlets of the first female compound connector and the second female compound connector are arranged in a predefined configuration, and each plug is removably connectable to each outlet.

In another embodiment of the present aspect, the zone box is shaped to house a predetermined number of second female compound connectors and the patch panel includes a plurality of zone boxes.

In a second aspect, the present invention provides a building wiring system. The building wiring system includes a patch panel, a cable bundle, a zone box, and a cable. The patch panel has a predetermined number of identical female compound receptacles for providing respective data channels therefrom. The cable bundle has identically configured male compound connectors, where each is pluggable into one of the female compound receptacles, for coupling the data channels to corresponding identically configured female compound connectors. The zone box houses the female compound connectors. The cable has a modular male compound connector identically configured to each male compound connector and pluggable into one of the female compound connectors, for coupling one of the data channels to a corresponding modular female compound connector identically configured to each female compound connector.

In an embodiment of the present aspect, the modular female compound connector is housed in a cable grommet for securing the modular female compound connector in a structure.

In a third aspect, the present invention provides a wiring cable. The wiring cable includes a male compound connector and a female compound connector. The male compound connector is removably pluggable into a complementary shaped outlet. The female compound connector is complementary to the male compound connector for receiving a plurality of wires housed in the wiring cable for electrically coupling the male compound connector to the female compound connector.

In an embodiment of the present aspect, the male compound connector includes three plugs, the female compound connector includes three outlets, and each plug is electrically coupled to a corresponding outlet, and the three plugs and the three outlets are arranged in a row configuration.

In a fourth aspect, the present invention provides patch cable having a sheath for transmission of a plurality of data channels. The patch cable includes a predetermined number of zone cables and a predetermined number of communication cables. The predetermined number of zone cables are bundled within the sheath, and each zone cable houses a plurality of communication lines. The predetermined number of communication cables are bundled within each zone cable, and each communication cable houses the communication lines associated with one of the plurality of data channels.

In embodiments of the present aspect, four zone cables are bundled within the sheath and three communication cables are bundled within each zone cable. In another embodiment of the present invention, one end of each communication cable is connected to an outlet and the other end of each communication cable is connected to a plug, where the outlet and the plug are complementary in shape.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 is a schematic view of a prior art zone wiring setup;
Fig. 2 is a diagram of a female compound connector according to an embodiment of the present invention;
Fig. 3 is a diagram of a male compound connector according to an embodiment of the present invention;
Fig. 4 is a top plan view of the male compound connector of Figure 3;
Fig. 5 shows an exploded view of the male compound connector of Figure 4;
Fig. 6 is an exploded view of an assembled bottom portion of the connector of Figure 5 and a top portion;
Fig. 7 is an illustration of a wall adaptor for securing the female compound connector of a zone cable in a wall panel;
Figs. 8 to 10 illustrate the assembly sequence of the wall adaptor shown in Figure 7;
Fig. 11 is an illustration of wall adaptor and frame in accordance with an embodiment of the invention prior to installation within a cubicle wall;
Fig. 12 is an illustration of a zone box according to an embodiment of the present invention;
Fig. 13 shows four female compound connectors attached to an extended face plate;
Fig. 14 shows a zone box having fully inserted surface mounting panels, prior to attachment of a zone box back cover;
Fig. 15 shows a male compound connector of a zone cable plugged into the female compound connector of a zone box;
Fig. 16 shows a pair of ganged zone boxes of a patch panel according to an embodiment of the present invention;
Fig. 17 shows a patch cable according to an embodiment of the present invention; and,
Fig. 18 shows a cross-section of the patch cable shown in Figure 17 along line A-A.

### DETAILED DESCRIPTION

Generally, the present invention provides a modular terminal connector system for communication and data wiring systems. A patch panel, a zone box, and a cubicle or workstation area are connected to each other with cables. Each cable carries at least one data channel comprising voice and data communications signals, and has one end coupled to a male compound connector and another end coupled to a female compound connector. The male compound connector includes three plugs and the female compound connector includes three outlets, where the plugs and the outlets are arranged in a complementary configuration such that the male compound connector can be plugged into the female compound connector. The zone box houses a number of female compound connectors, while the patch panel includes a number of ganged zone boxes. The cubicle or workstation area can include a cable grommet for securing a female compound connector therein.

Modularity of the system is achieved by setting the male and female compound connectors as the smallest units of the system. The zone box is a larger unitary component adapted to house a predetermined number of female compound connectors, and the patch panel is usually the largest component of the system that houses a number of ganged zone boxes. The configuration of the outlets of each female compound connector are identical, where each outlet provides one data signal line of a data channel. Assembly of the zone boxes and the patch panel is simplified because the same female compound connectors are used exclusively throughout the system. Proper connection of the data signals of a data channel between a source and a destination is simplified because the male compound connectors of each cable include individual plugs having a configuration complementary to the configuration of the outlets of the female compound connector. Naturally, the plugs are complementary in shape to corresponding outlets for convenient insertion and removal.

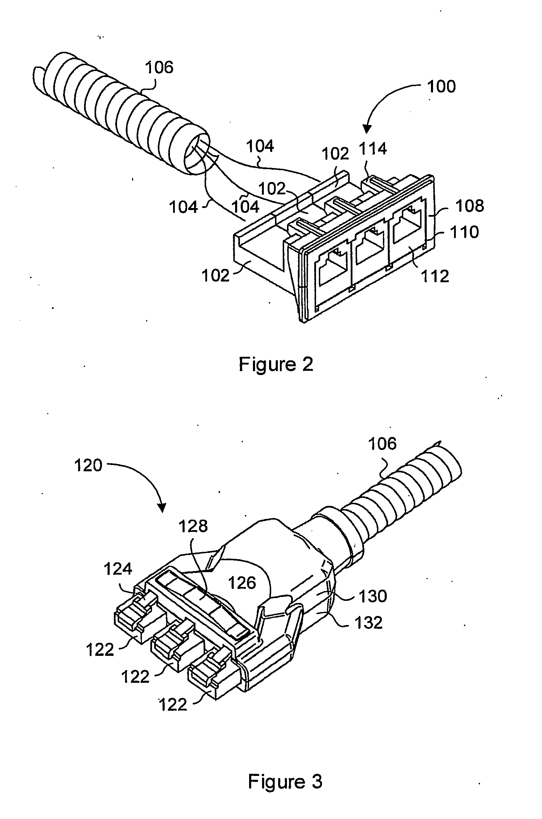

Figure 2 is a diagram of a female compound connector according to an embodiment of the present invention. Female compound connector **100** includes three commercially available outlets or jacks **102** arranged in a row configuration, where each outlet **102** is connected to respective wires **104.** Only one wire **104** is shown connected to a respective outlet **102** to simplify the illustration, but those of skill in the art will understand that the single wire **104** represents the set of wires required for proper functionality of that outlet. The female compound connector **100** embodiment of Figure 2 is also referred to as a female socket triplet. The configuration of the outlets **102** can be maintained by securing adjacent outlets **102** to each other with glue. Since multiple wires **104** are associated with a single data channel, and three channels are respectively associated with each compound connector, added handling convenience, material savings and reliability can be attained by physically grouping all the wires **104** of the same compound connector into a single cable sheath. Those of skill in the art will understand that any type of signal communication outlet or jack can be used, such as optical communication outlets for example.

In an alternative embodiment, a plastic face plate **108** can be used to secure the three outlets **102** in the row configuration. The face plate **108** can be constructed to retain the three outlets **102** in the row configuration without the need for any glue, or other permanent method of securing the outlets **102** to each other. Face plate **108** has an opening **110** shaped to receive the faces **112** of the three outlets **102,** and flexible retaining clips **114** arranged at positions to retain one outlet **102.** To assemble female compound connector **100,** the outlets **102** are individually inserted into face plate **108.** Each flexible retaining clip **114** is deflected away by an upper surface of the outlet **102** until the outlet has been fully inserted. Then the flexible retaining clip **114** engages the edge of the outlet upper surface to retain the outlet **102** in place. This arrangement allows for simple replacement of any defective outlet **102** by physically deflecting the flexible retaining clip **114** while pulling the defective outlet **102** away from face plate **108.** Those of skill in the art should understand that plastic face plate **108** can be manufactured from well known techniques such as injection molding for example.

While the female compound connector **100** is assembled at one end of each cable **106,** a complementary male compound connector is assembled at the other end of each cable **106.** The male compound connector can be plugged into all female compound connectors of the modular wiring system for simple and flexible on-site connection of data signals between the patch panel and the zone boxes, and between the zone boxes and the workstations.

Figure 3 is a diagram of a male compound connector, also called a male socket triplet, according to an embodiment of the present invention. Male compound connector **120** includes three commercially available plugs **122** arranged in a row configuration. Each plug **122** has a locking tab **124** that interlocks with a complementary outlet, such as outlet **102** of Figure 2, to prevent inadvertent disconnection. The plugs **122** are partially housed in a socket casing **126** such that their electrical terminals are exposed while a portion of their locking tabs remain inside the socket casing **126.** A release button **128** in sliding engagement with the socket casing **126** is positioned over the portion of the locking tabs **124** inside socket casing **126.** The plugs **122** are arranged in a row configuration complementary to the row configuration of the outlets **102** of female compound connector **100,** such that the male compound connector **120** can be plugged into female compound connector **100.** Disconnection of the male compound connector **120** from a female compound connector **100** is achieved by depressing release button **128** for simultaneous depression of all locking tabs **124,** and pulling the male compound connector **120** away from female compound connector **100.** Those of skill in the art will understand that any type of signal communication plug configured to mate with its corresponding outlet can be used.

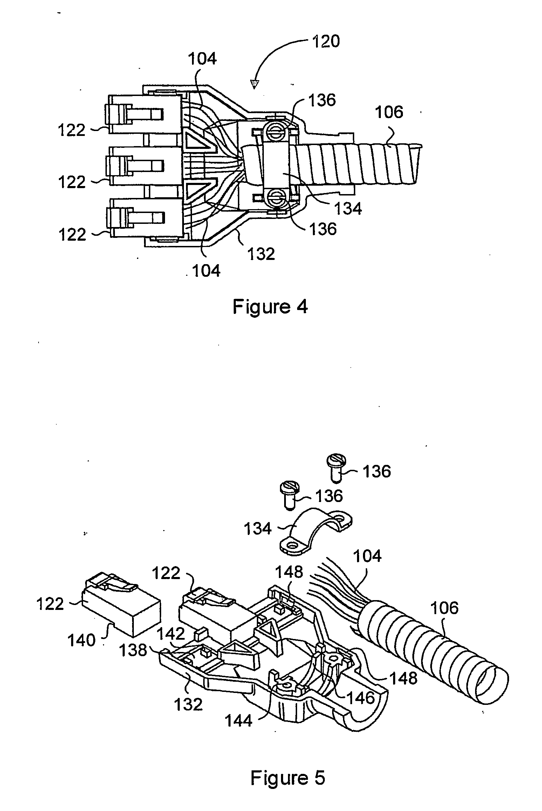

Accordingly, the socket casing **126** of male compound connector **120** can be manufactured using well known techniques such as injection molding. In the present example of Figure 3, socket casing **126** comprises a molded top portion **130** and a molded bottom portion **132** that can be secured together with screws, glue or any other suitable securing means known to those of skill in the art. Socket casing **126** not only provides structural and mechanical support for plugs **122,** it also allows for convenient handling by a person installing the modular wiring system. A description of the assembly of male compound connector **120** follows with reference to Figure 4.

Figure 4 is a top plan view of male compound connector **120** of Figure 3 with top portion **130** removed to illustrate the arrangement of its components. In the present example, each plug **122** is coupled to corresponding outlets **112** of the female compound connector **100** shown in Figure 2 through wires **104** in cable **106.** As in Figure 2, wires **104** represent the actual number of wires required for functionality of each plug **122.** Each plug **122** is seated in a dedicated position in bottom portion **132,** where each position is shaped for receiving a plug **122.** This feature is shown in Figure 5. While each plug **122** is retained within male compound connector **120** when the top portion **130** and the bottom portion **132** are assembled together, plugs **122** can be optionally glued to the bottom portion **132.** Cable **106** is secured to bottom portion **132** by clamp **134** via screws **136** to prevent separation of wires **104** from plugs **122** whenever cable **106** is being pulled away from male compound connector **120.** Further details of the plug positions and the cable securing mechanism are shown in Figure 5.

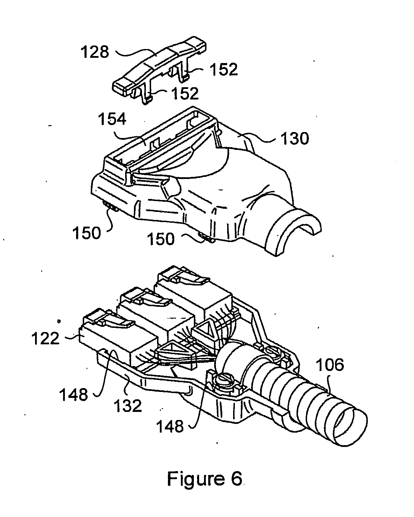

Figures 5 and 6 illustrate how the male compound connector **120** shown in Figures 3 and 4 is assembled.

Figure 5 shows an exploded view of the male compound connector components of Figure 4. One of the plugs **122** is not shown to simplify the illustration. As shown in Figure 5, bottom portion **132** includes recesses **138** shaped to receive a lower extension of plug **122,** where the lower extension is defined by edge **140** to the rear end of plug **122.** The depth of recesses **138** is about the same as the length of edge **140.** Projections **142** extending perpendicularly from the surface of recesses **138** mate with complementary recesses in the lower extension of plug **122** (not shown). Recesses **138,** projections **142** and the lower extension of plug **122** cooperate together to lock plug **122** from any lateral movement relative to the plane of the bottom portion **132..** Vertical movement of the plug is prevented after the top portion **130** is secured to the bottom portion **132.** To secure cable **106, '** bottom portion **132** includes a pair of screw apertures **144** for receiving screws **136,** and a pair of rounded ribs **146** for receiving cable **106.** Hence as clamp **134** presses cable **106** against ribs **146,** the frictional contact between the cable **106** and the ribs **146** increases, and cable **106** is secured from accidental separation from male compound connector **120.** Bottom portion **132** further includes female snap receptacles **148** for receiving male snaps (not shown) formed on the top portion **130.** The top portion **130** with the male snaps is shown in Figure 6. It is noted that the pair of female snap receptacles arranged on the opposite side of female snap receptacles **148** are not visible in Figure 5. A description of the male snaps and the female snap receptacles is not required since these are well known means for retaining plastic components together.

Figure 6 is an exploded view of an assembled bottom portion **132** of Figure 5 and a top portion **130.** The plugs **122,** wires **104** and cable **106** are shown in their installed state within bottom portion **132** of the male compound connector **120.** Top portion **130** includes male snaps **150** extending from its edges at appropriate positions for engaging the female snap receptacles **148** of the bottom portion **132.** Release button **128** is rectangular shaped for sliding engagement with correspondingly shaped rectangular slot **154.** Four hooked retaining legs **152** extend from the bottom of release button **128** to engage edges (not shown) within slot **154** to prevent release button **128** from sliding out of rectangular slot **154.**

While the outlets of female compound connector **100** and plugs of male compound connector **120** are shown arranged in a row configuration, alternate configurations in which the outlets or plugs are stacked can be used. Of course, those of skill in the art wil understand that the female compound connector is not limited to three outlets, and can include more than three outlets for accommodating more communications signals. Furthermore, outlets and plugs having different shapes can be combined together in the male and female compound connectors.

Cable **106** having a female compound connector **100** and male compound connector **120** attached to both its ends illustrates an example of a single cable, called a zone cable according to an embodiment of the present invention. Such a zone cable can be used to connect the electronic devices of a cubicle to a zone box. The present zone cable has the same function as a group of 3 zone wires **60** shown in Figure 1. In use, the female compound connector **120** of each zone cable is secured in a wall panel, cubicle panel or desk for user accessibility.

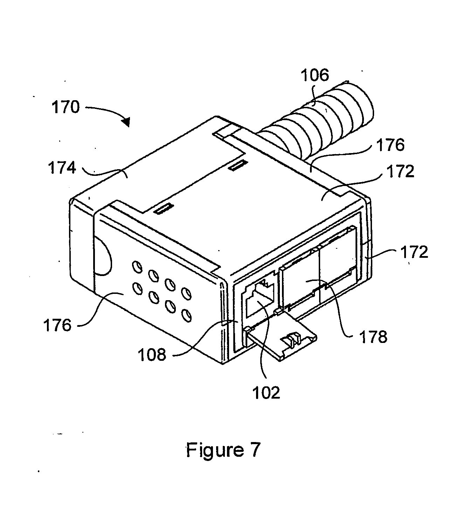

Figure 7 is an illustration of a wall adaptor for securing the female compound connector of a zone cable in a wall panel, cubicle panel or desk according to an embodiment of the present invention. More specifically, the wall adaptor houses a female compound connector. Wall adaptor **170** consists of a pair of identical adaptor covers **172,** adaptor back cover **174,** and a pair of identical side panels **176.** Wall adaptor **170** protects the wiring and outlets of the female compound connector and provides convenient means for handling the female compound connector during installation. Although not shown in Figure 2, the face plate of Figure 7 includes outlet covers **178** to prevent the accumulation of dust and materials that can damage or inhibit the functionality of outlets **102.**

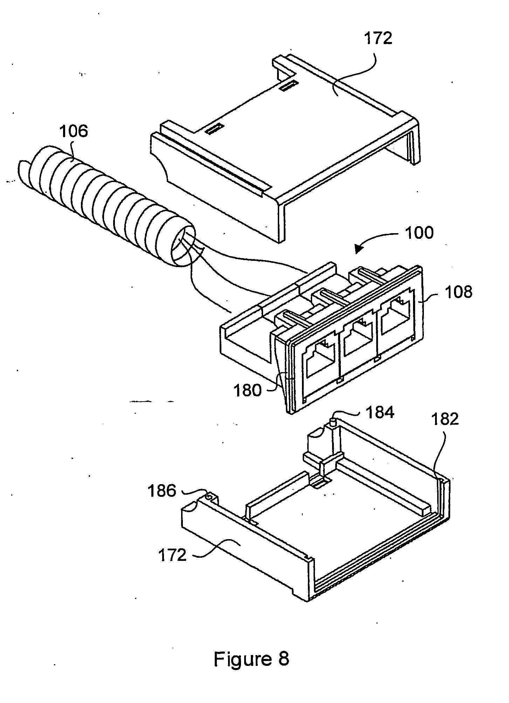

Figures 8 to 10 illustrate the assembly sequence of the wall adaptor shown in Figure 7. In Figure 8, a female compound connector **100** identical to the one shown in Figure 2, has a continuous ridge **180** protruding from face plate **108.** The continuous ridge **180** mates with corresponding continuous grooves **182** in the adaptor covers **172** by sliding the vertical portions of the continuous ridge **180** into the vertical portions of the continuous grooves **182.** When fully inserted, the horizontal portions of the continuous ridge **180** engages the horizontal portions of continuous grooves **182.** Each adaptor cover **172** further includes a round projection **184** and a round recess **186** that mate with a corresponding recess and projection respectively on the other adaptor cover **172.** Once the pair of adaptor covers **172** enclose face plate **108,** the continuous ridge **180,** the continuous groove **182,** the projections **184** and the recesses **186** cooperate to prevent lateral movement of the adaptor covers **172** relative to each other. It is noted at this stage, the pair of adaptor covers **172** are not yet secured-to each other.

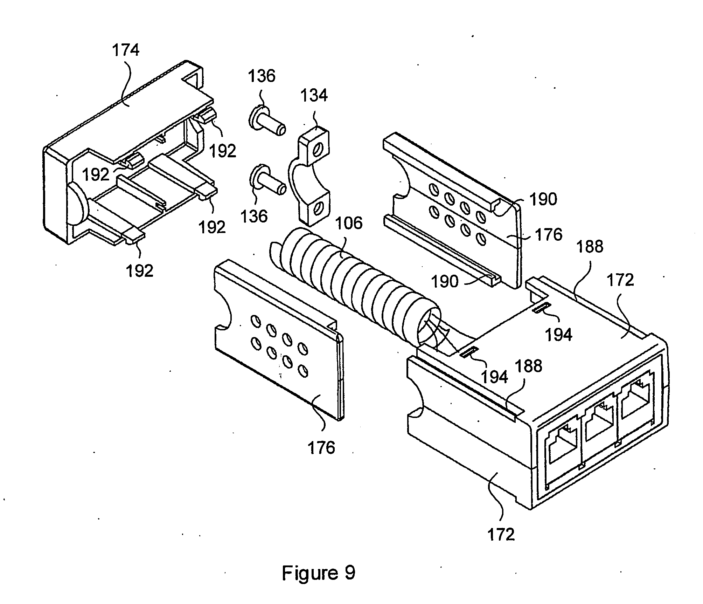

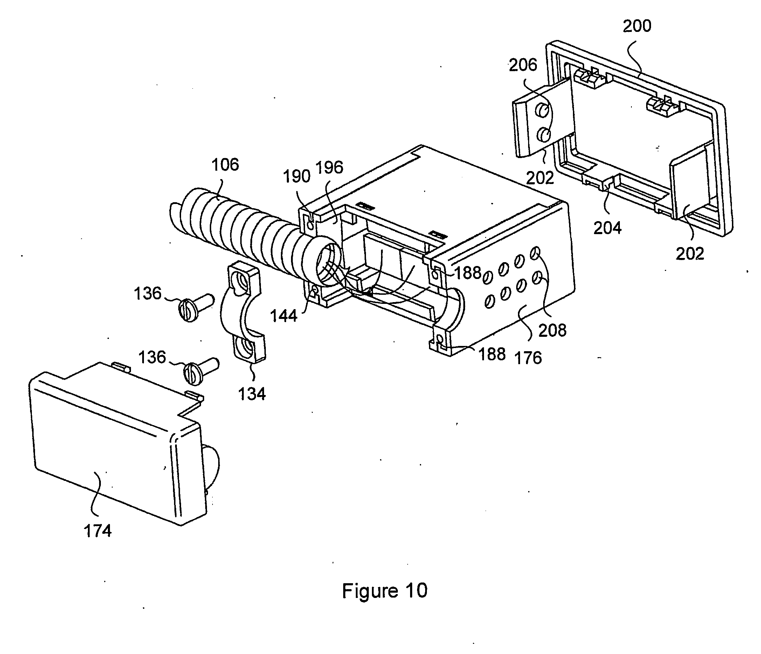

In Figure 9, grooves **188** formed at the corners of each adaptor cover **172** receive corresponding rails **190** of each side panel **176.** Grooves **188** are shown in further detail in Figure **10****.** Because the grooves **188** do not fully extend from the rear to the front of each adaptor cover **172,** each side panel **176** is slid onto the grooves **188** from the rear of the pair of adaptor covers **172.** Once fully inserted, the side panels **176** bind adaptor covers **172** together. Cable **106** can be secured to the rear of either adaptor cover **172** by clamp **134** via screws **136,** as will be shown in further detail in Figure **10****.** Adaptor closing cover **174** includes four hooked retaining legs **192** that mate with corresponding retaining apertures **194** formed in the top surface of each adaptor cover **172.** Adaptor closing cover **174** is sized to be wider than the width of adaptor covers **172,** and preferably has a width equal to the combined width of the adaptor covers **172** and both the inserted side panels **176.** Therefore, when adaptor closing cover **174** is secured to adaptor covers **172,** side panels **176** are effectively locked in place.

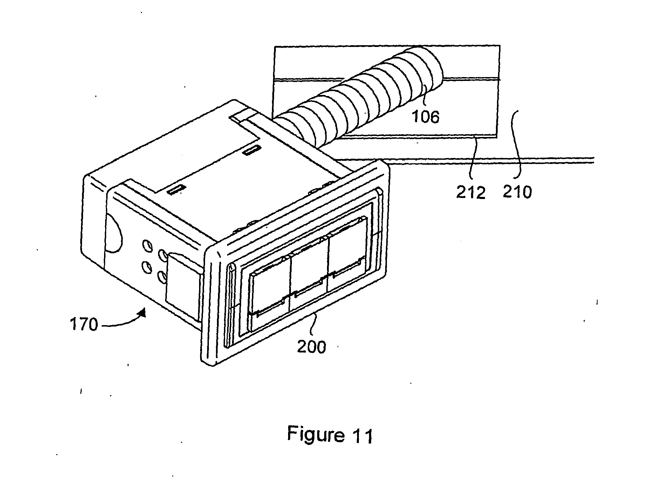

Figure 10 shows the rear of wall adaptor **170** prior to attachment of adaptor closing cover **174** to adaptor covers **172.** The rails **190** of the side panels **176** are clearly shown engaged with grooves **188.** Pairs of screw apertures **144** formed in the rear of adaptor covers **172** receive screws **136** for securing cable **106** to the adaptor covers **172.** The alignment of clamp **134** dictates that cable **106** is arranged with its radial axis parallel to the width dimension of the adaptor covers **172.** Cable **106** can be routed into wall adaptor **170** from the side opposite to the one where cable **106** is shown seated, and secured to the other pair of screw apertures **144.** The arrangement is preferred for installing wall adaptor **170** into cubicle wall units, as will be discussed in further detail with reference to Figure **11**. Those of skill in the art should understand that modifications can be made to the wall adaptor design to accommodate a cable having its radial axis aligned perpendicular to the width direction of adaptor covers **172.** In such a modification, the inner walls **196** at the rear of adaptor covers **172** can be thickened for the formation of screw apertures therein.

In an alternative embodiment, wall adaptor **170** can be fitted with a frame, or grommet, for securing it within cubicle walls. Frame **200** is rectangular in shape, having two spacer arms **202** and four wall snaps **204** extending rearwardly. The opening of frame 200has a greater width and height than the width and height of assembled wall adaptor **170.** Each spacer arm **202** has a pair of stop projections **206** extending therefrom, such that the pairs of stop projections **206** on each spacer arm **202** face each other. Each side panel **176** of wall adaptor **170** includes four pairs of depth selector recesses **208,** where the pairs of recesses are linearly arranged along the length direction of wall adaptor **170** for receiving a pair of stop projections **206.** The function of the frame and the depth selector recesses **208** is described below.

Spacer arms **202,** stop projections **206** and depth selector recesses **208** cooperate to permit the face of wall adaptor **170** to extend beyond the face of frame **200** by a preset length determined by the positions of depth selector recesses **208** relative to the face of wall adaptor **170.** The wall adaptor **170** extension from frame **200** is maximised when stop projections **206** engage the depth selector recesses **208** furthest away from the face of wall adaptor **170.** Conversely, the wall adaptor **170** extension from frame **200** is minimised when stop projections **206** engage the depth selector recesses **208** closest to the face of wall adaptor **170.** Once the desired extension is set, the frame **200** with attached wall adaptor **170** is pushed into an appropriately sized wall opening or cubicle wall opening. Wall snaps **204** then engage the edges of the wall opening and lock frame **200** in place.

Figure 11 is an illustration of wall adaptor **170** and frame **200** prior to installation within a cubicle wall. In the situation shown in Figure 11, pre-assembled wall adaptor **170** has been routed through wall **210** and pulled through wall opening **212.** Frame **200** has been attached to wall adaptor **170** for the desired extension length. It should be obvious to those of skill in the art that wall adaptor **170** can be routed from the left side of the wall **210** instead of the right side, and accordingly, cable **106** would be secured at the other side of wall adaptor **170.** Installation is completed when frame **200** with attached wall adaptor **170** is pushed into wall opening **212,** and wall snaps **204** (not shown) engage the edges of wall opening **212.**

The female compound connector **100** shown in Figure 2 and the male compound connector **120** shown in Figure 3 can be pre-assembled and connected to a cable by the manufacturer. The cable lengths can be customized to client specifications, or alternatively, sold in preset lengths to be used as zone cables. If a preset length is insufficient for a client's requirements, a combination of specific preset lengths can be serially connected together to obtain the minimum required length by simply plugging the male compound connector of a following cable to the female compound connector of a previous cable. Hence such zone cables can be mass produced to reduce manufacturing costs. Furthermore, the construction of a wall adaptor requires minimal effort since its constituent components are simple to assemble with only a single screwdriver tool. The wall adaptor according to the embodiment of the present invention can be assembled on site, or preferably by the manufacturer if the client desires full customization.

According to another embodiment of the present invention, the zone cables described above can be used to construct zone boxes. As previously shown in Figure 1, zone box **54** is a distribution point for a predetermined number of data channels received from patch panel via patch wiring **58.** The zone box according to the present embodiment is a larger scale version of wall adaptor **170** shown in Figures **7** to **11****,** which uses substantially the same components and is assembled in the same way.

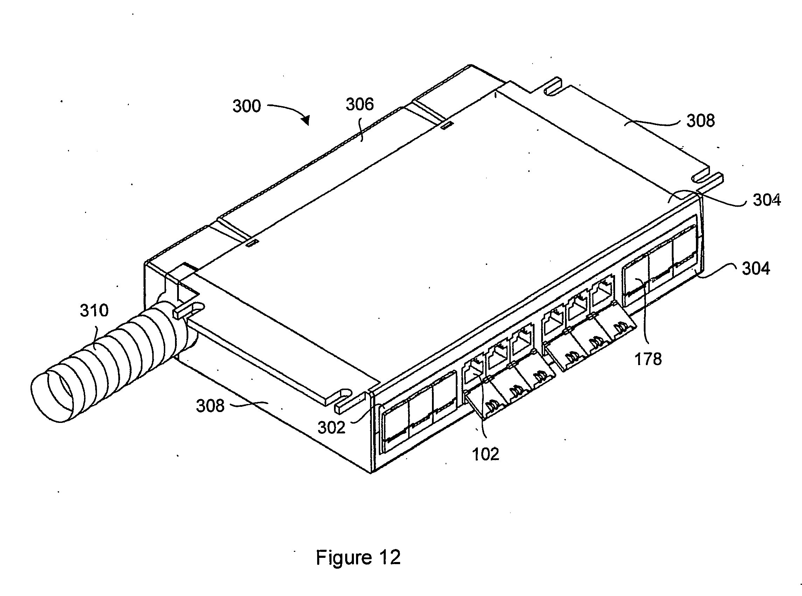

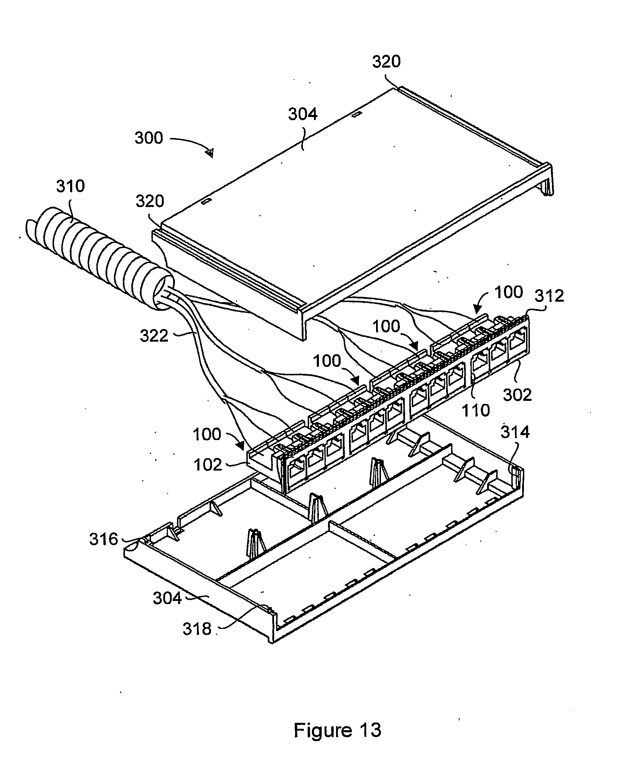

Figure 12 is an illustration of a zone box according to an embodiment of the present invention. In this particular example, zone box **300** houses four female compound connectors. Zone box **300** consists of an extended face plate **302,** a pair of identical zone box covers **304,** a zone box back cover **306,** and a pair of side panel **attachments 308.** Different side panel attachments **308** can be fabricated for different applications, and in the present embodiment, surface mounting panels are used. Zone box **300** protects the wiring and outlets of the female compound connector and provides convenient means for handling all four female compound connectors during installation. Zone box **300** is an elongated version of wall adaptor **170** shown in Figure 7. In particular extended face plate **302,** zone box covers **304** and zone box back cover **306** are constructed to be about four times wider than the width of face plate **108** and adaptor covers **172** of wall adaptor **170** shown in Figure 7. The assembled zone box **300** of Figure 12 is shown with an attached patch cable **310** that carries the wires which are connected to the outlets **102** of each female compound connector, and outlet flaps **178** which are the same as those shown in Figure 7. Further details of zone box **300** are shown in Figures **13** to **14****.**

Figures **13** to **14** illustrate the assembly sequence of the zone box shown in Figure 12, which is the same assembly sequence for wall adaptor **170.**

In Figure 13, four female compound connectors **100** are shown attached to extended face plate **302.** Accordingly, extended face plate **302** includes four openings **110,** each having an identical shape to opening **110** in face plate **108** of Figure 2. A continuous ridge **312** on extended face plate **302** mates with corresponding continuous grooves **314** in the zone box covers **304** by sliding the vertical portions of the continuous ridge **312** into the vertical portions of the continuous grooves **314.** Each zone box cover **304** further includes a round recess **316** and round projection **318** that mate with a corresponding projection and recess respectively of the other zone box cover **304.** As with wall adaptor **170,** the continuous ridge **312,** the continuous groove **314,** the round projections and round recesses **316** cooperate to prevent lateral movement of the zone box covers **304** relative to each other when assembled together. Grooves **320** formed at the corners of each zone box cover **304** are similar to grooves **188** shown in Figure 9, and receive corresponding rails of each surface mounting panel **308.** Although not shown in the figures, the corresponding rails of the surface mounting panels **308** have the same cross-sectional shape as rails **190** of side panels **176** in Figure 9 for binding zone box covers **304** to each other when fully inserted onto grooves **320.** The wires corresponding to the same data channel are physically grouped together in their own channel cable **322,** and all the channel cables **322** associated with zone box **300** are physically grouped together in a patch cable **310.** In this particular example, the components of zone box **300** are constructed to house four pre-assembled female compound connectors **100** in a row configuration. However, it should be obvious to those of skill in the art that zone box **300** can be constructed to house more than four female compound connectors, and in configurations other than in the row configuration shown in Figure 12. For example, zone box **300** can be constructed to house female compound connectors arranged in multiple rows, or in a stacked column configuration.

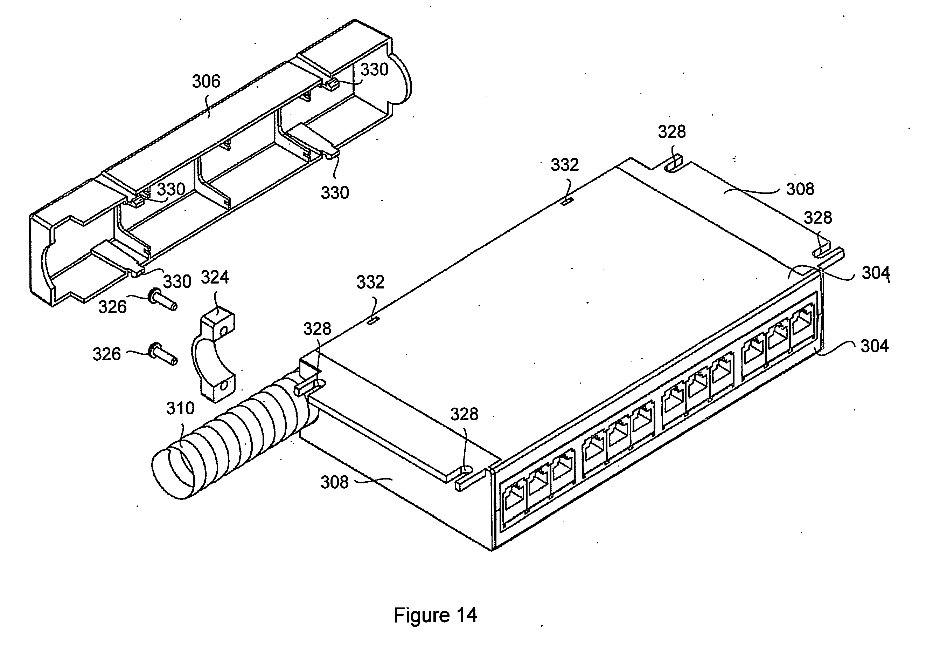

Figure 14 shows zone box 300 having fully inserted surface mounting panels **308,** prior to attachment of zone box back cover 306. Extending perpendicularly away from each surface mounting panel **308** are mounting wings each having a pair of screw apertures **328.** Hence each zone box **300** can be secured to any flat surface with screws. Zone cable **310** can be secured to the rear of zone box cover **304** by zone cable clamp **324** via screws **326** in the same manner as cable **106** is secured to adaptor covers **172** in Figure 9. Zone box back cover **306** includes four hooked retaining legs **330** that mate with corresponding retaining apertures **332** formed in top surface of each zone box cover **304.** Zone box back cover **306** is sized to be wider than the width of zone box covers **304,** and preferably has a width equal to the combined width of the zone box covers **304** and both the inserted surface mounting panels **308.** Therefore, when zone box back cover **306** is secured to zone box covers **304,** surface mounting panels **308** are effectively locked in place. Although not shown in the figures, screw apertures are formed in the rear of zone box covers **304** to receive screws **326.**

As previously shown in Figure 13, channel cables **322** are grouped together within patch cable **310** in the same way that wires **104** are grouped together within zone cable **106.** However, those of skill in the art will appreciate that the four channel cables **322,** each housing a plurality of wires, will require patch cable **310** to have a larger diameter than zone cable **106.** Naturally, the height of each zone box **300** will be at least the diameter of patch cable **310.**

Since the zone box of the present embodiment is an enlarged version of the wall adaptor shown in Figures 7 to **10****,** the same steps used for assembling the wall adaptor shown in Figures 8 to **10** are used for assembling the zone box. The zone box according to the embodiment of the present invention can be assembled on site, or preferably by the manufacturer if the client desires full customization.

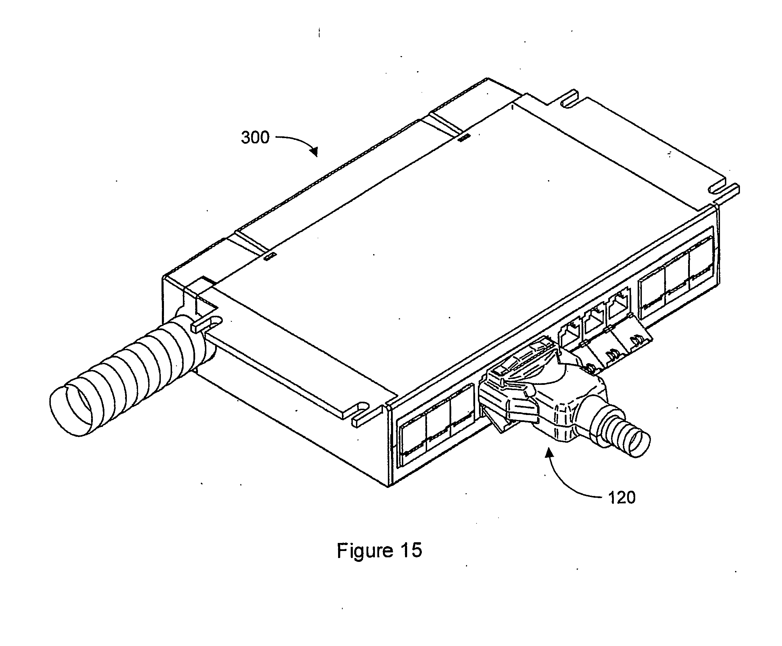

Figure 15 shows a male compound connector **120** of a zone cable plugged into the female compound connector **100** of a zone box **300.** Because each zone cable and associated data channel is designated for a specific workstation or cubicle, identifying markings can be used to match the correct data channel with the designated cubicle. For example the faces of each female compound connector **100** and the male compound connectors **120** can be colour coded to simplify installation. Apart from matching the data channel of the zone box to a specific zone cable, installing the modular wiring system can be done without error because the outlets of the female compound connectors and the plugs of the male compound connectors are physically arranged in a preset configuration. In other words, the installer does not need to concern him/herself with plugging in an individual voice plug into a corresponding voice outlet. Moreover, each female and male compound connector combination linked by an intermediate zone cable is prewired to service one workstation. Consequently, the installer need not concern him/herself with identifying, as is currently necessary, the three individual zone cables for voice, data and printer which are associated with a particular workstation. Of course, since the zone wires with attached male and female compound connectors can be tested in the factory for connection reliability, on-site cable end dressing and the associated mistakes and contact failures, are completely avoided with the wiring system of the invention. Hence installation of the modular wiring system does not require specialized technicians and labour cost savings can be realized.

Zone boxes **300** shown in the previous figures can be used for constructing a patch panel according to an embodiment of the present invention. Because the fundamental component of the patch panel are zone boxes **300,** only different types of side panel attachments are required for its assembly.

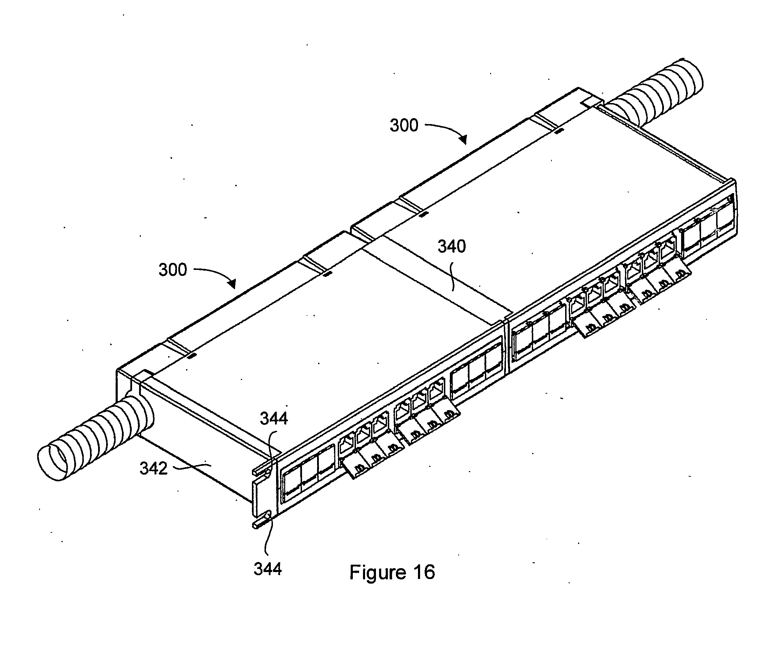

Figure 16 shows a pair of zone boxes **300** of a patch panel according to an embodiment of the present invention. Both zone boxes **300** are ganged together in a row configuration, where multiple pairs of zone boxes can be stacked on top of one another in a column. Although not shown in Figure 16, each pair of zone boxes **300** is secured to a panel frame. Ganging each pair of zone boxes and securing them to the panel frame requires different side panel attachments than the surface mounting panels shown in Figures **14** and **15** for mounting the zone box to a flat surface. A coupling panel 340 includes a first pair of rails (not shown) for sliding into the pair of grooves of a first zone box 300, and a second pair of rails (not shown) for sliding into the pair of grooves of a second zone box **300** Once inserted, coupling panel **340** couples both zone boxes **300** to each other. The cross-sectional shape of the first and the second pair of rails is the same as the rails of side mounting frame **308** and side panel **176**, and hence does not require further description. Frame mounting panel **342** is inserted onto the grooves opposite to the grooves engaged with coupling panel **340**, and includes a mounting wing that extends perpendicularly away from zone box **300**. A frame mounting panel **342** is intentionally omitted from the right side zone box **300** in Figure 16. The mounting wing includes screw apertures **344** for receiving screws that secure zone box **300** to the panel frame. The difference between surface mounting panel **308** and frame mounting panel **342** is the orientation of their mounting wings. The mounting wing of surface mounting panel **308** is coplanar to the top surface of zone box **300**, while the mounting wing of the frame mounting panel **342** is coplanar to the extended face plate of zone box **300**.

The reduced number of components used in the modular wiring system according to the embodiments of the present invention lowers the overall cost of the system. More specifically, reusing existing components to construct larger components reduces the overall componentry cost of the system. Referring to Figure 1, if the zone wiring system **50** is implemented with the components of the modular wiring system according to embodiments of the invention, then at least two main types of components are required. The first components are zone cables **106** having female compound connectors and male compound connectors, and the second components are zone boxes **300.** As shown in Figures **12-15****,** each zone box **300** is a physical grouping of the female compound connectors of several zone cables **106**, and each patch panel is a collection of zone boxes **300.** Accessories such as side panel attachments, wall adaptors and grommets are easily manufactured for adapting the main components for use in specific applications.

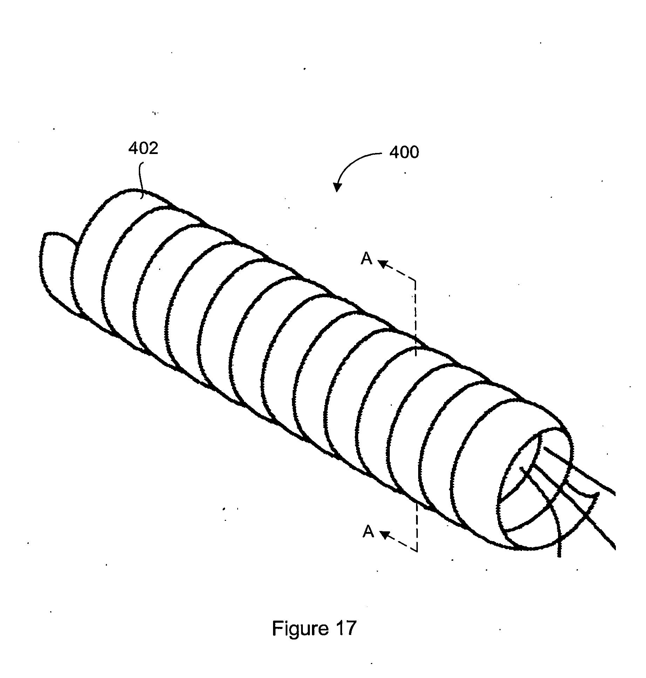

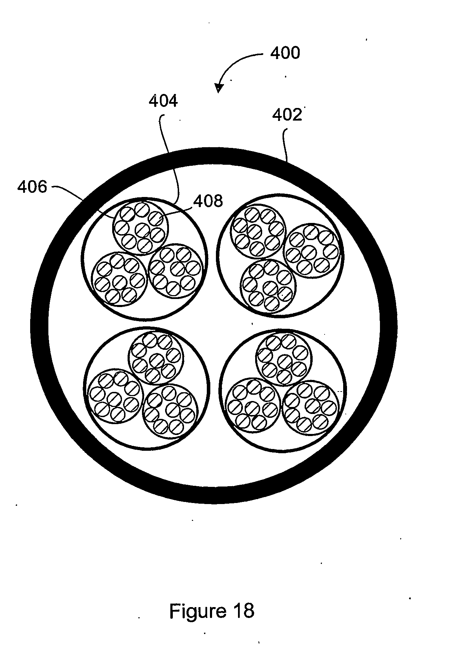

According to another embodiment of the present invention, the patch cables **58** and zone cables **60** can be manufactured or pre-assembled with sets of wires or cables bundled together to facilitate on-site installation of the modular wiring system previously shown and discussed. In a preferred embodiment, the cables are bundled in a hierarchical configuration such that each patch cable **58** bundles a predetermined number of zone cables **60,** each zone cable **60** bundles a predetermined number of communication cables, and each communication cable bundles a predetermined number of communication lines. The communication lines can include any-signal transmission medium such as copper wires and optical fibre lines for example. Figures 17 and 18 illustrate a patch cable according to an embodiment of the present invention that is configured for use with the zone wiring system components disclosed in the previous figures.

A patch cable **400** according to an embodiment of the present invention for connecting a patch panel to one zone box in a zone wiring system is shown in Figure 17. In the present example, it is assumed that the zone cable carries all the wires for a corresponding zone box. Zone cable **400** includes a wound armoured sheath **402** for bundling four zone cables. The armored sheath **402** of zone cable **400** is well known in the art and provides electrical and mechanical shielding for the bundled cables. Furthermore, sheath **402** limits the bending arc of zone cable **400** and its bundled cables within industry specifications.

Figure 18 shows a cross-sectional view of patch cable **400** of Figure 17 taken along line A-A. In the present example, four zone cables **404** are bundled within patch cable **400** since the zone box, such as zone box **300** shown in Figure 12, is configured to receive up to four zone cables **404.** Each zone cable **404** bundles three communication cables **406,** and each communication cable **406** bundles a set of communication lines **408.** Each communication cable **406** is associated with a data channel. In use, one end of each zone cable **404** is connected to a male compound connector such as male compound connector **120** shown in Figure 4, for insertion into patch panel **52,** and the other end of each zone cable **404** is connected to a female compound connector, such as female compound connector **100** shown in Figure 2, for assembly into zone box **300.**

Preferably, each zone cable **404,** communication cable **406** and communication line 408 is labelled or colour coded to facilitate proper electrical connection to the outlets/plugs that are associated with the corresponding zone cable **404.** Because of the hierarchical bundling of the wires and cables, identification of the individual communication lines can be achieved quickly.

Connectivity between each workstation area to the zone box **300** can achieved by using a zone cable **404** having an armoured sheath similar to armour sheath **402.** Such a zone cable can be identical in configuration to zone cable **404** shown in Figure 18 and can have its ends connected to male and female compound connectors.

An advantage to bundling other than simplified installation is reduced bulk of the cable since many insulating layers become superfluous in the bundled environment. For example, each zone cable **404** of patch cable **400** can consist of a mylar coating to bundle its communication cables, and each communication cable **406** can consist of a mylar coating to bundle its communication lines **408.** The minimum electrical insulation requirements can be met while reducing the bulk and weight of the patch cable.

Other important advantages of the modular wiring system of the present invention are improved reliability, reduced on-site installation time and improved ease of installation. Contrary to existing wiring methods, no on-site wire dressing and wire end connections need be made. Due to the modular character of the present wiring system, all wiring components can be pre-assembled in the factory, which means transmission quality of the cables and connectors can be tested prior to on-site installation. Moreover, the modular character of the present system significantly reduces on-site installation time, since the installation process is limited to placement of the finished cable, including the end connectors, zone boxes, or wall adaptors and the interconnecting cable bundle, at the desired location and plugging in of the end connectors. This reduces installation time, because it is no longer necessary to fish individual wires through the ceiling, floor or wall installation space. Additionally, when armoured sheath cable is used, installation time is further reduced, since the installation of conduits for the individual wires, as required under most building codes, is obviated. The armoured sheath furthermore significantly reduces the danger of damage to the individual wires by sharp objects or by bending the cable at improper radii. Finally, on-site cabling errors are significantly minimized by the use of the modular wiring system of the invention after pre-assembly, testing and labelling of the connector ends in the factory, less installation space is needed due to the bundling of the wires in a compound cable, and tracing of individual cables in the installation space is much facilitated.

An example of an installation procedure follows. Once the layout of an office is determined, the floor plans are reviewed by the modular wiring system manufacturer, such as Electec Limited (Ottawa, Canada). The manufacturer then customizes the appropriate cable lengths, assembles all the necessary wiring components, such as a patch panel, zone boxes **300,** wall adaptors **170** and all bundled cabling and then tests the assembled wiring components at the factory. The patch panel, zone boxes **300** and wall adaptors **170** are then installed on site at their designated locations and their respective cables are routed to their designated sources. The final step is plugging male compound connectors into the patch panel and the zone boxes.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A building zone wiring system for providing a data connection between a patch panel (52) having a data channel and a workstation (56), comprising:
a first cable (58) for connecting the data channel with a node (54), the cable having a first male compound connector (120) for plugging into the patch panel (52) and a first female compound connector (100) for location at the node (54), the first male compound connector (120) having at least two commercially available plugs (122), each commercially available plug (122) receiving one communication signal of the data channel, and the first female compound connector (100) having at least two commercially available jacks (102), each commercially available jack (102) being coupled to a corresponding commercially available plug (122); and
a second cable (60) for continuing the data channel from the node (54) to the workstation (56), the second cable (60) having a second male compound connector configured identically to the first male compound connector (120) and for plugging into the first female compound connector (100), and a second female compound connector identically configured to the first female compound connector (100) for location at the workstation (56).

2. The building wiring system of claim 1, wherein the second female compound connector is housed in a cable grommet for securing the second female compound connector in a structure.

3. The building wiring system of claim 1, wherein the data channel includes three communication signals.

4. The building wiring system of claim 1, wherein the first male compound connector (120) and the second male compound connector include three commercially available plugs (122), each commercially available plug (122) receiving a respective communication signal.

5. The building wiring system of claim 4, wherein the first female compound connector (100) and the second female compound connector include three commercially available jacks (102), each commercially available jack (102) being coupled to a corresponding commercially available plug (120).

6. The building wiring system of claim 5, wherein the three commercially available plugs (120) of the first male compound connector (120) and the second male compound connector, and the three commercially available jacks (102) of the first female compound connector (100) and the second female compound connector are arranged in a predefined configuration.

7. The building wiring system of claim 6, wherein each commercially available plug (122) is removably connectable to each commercially available jack (102).

8. The building wiring system of claim 1, wherein the node (54) is a zone box shaped to house the first female compound connector (100) and a predetermined number of other female compound connectors substantially identical to the first female compound connector (100).

9. The building wiring system of claim 8, wherein the patch panel (52) includes a plurality of zone boxes.

10. The building wiring system of claim 1, wherein the patch panel (52) has a predetermined number of female compound receptacles for providing respective data channels therefrom, the first male compound connector (120) being pluggable into any one of the female compound receptacles.

11. The building wiring system of claim 5, wherein the three commercially available plugs (122) and the three commercially available jacks (102) are arranged in a row configuration.

12. The building wiring system of claim 7, wherein each commercially available plug (122) includes a locking tab (124) for interlocking with each commercially available jack (102).

13. The building wiring system of claim 12, wherein the first male compound connector (120) includes a release button (128) positioned for simultaneously depressing each locking tab (124).

14. The building wiring system of claim 1, wherein the at least two commercially available plugs (122) of the first and the second male compound connectors have identical configurations, and the at least two commercially available jacks (102) of the first and the second female compound connectors have identical configurations.

15. The building wiring system of claim 1, wherein one of the at least two commercially available plugs (122) of the first and the second male compound connectors has a different configuration than the other of the at least two commercially available plugs (122), and one of the at least two commercially available jacks (102) has a different configuration than the other of the at least two commercially available jacks (102).

16. The building wiring system of claim 1, wherein each male compound connector includes a casing (126) for partially housing the at least two commercially available plugs.

17. The building wiring system of claim 16, wherein each commercially available plug (122) includes a locking tab (124) for interlocking with each commercially available jack (102) and the casing (126) of the first male compound connector (120) includes a release button (128) positioned for simultaneously depressing each locking tab.

## Patentansprüche

1. Bauzonen-Verdrahtungssystem zur Bereitstellung einer Datenverbindung zwischen einem Patchfeld (52), das einen Datenkanal hat, und einem Computerarbeitsplatz (56), bestehend aus:
einem ersten Kabel (58) zur Verbindung des Datenkanals mit einem Knotenpunkt (54), wobei das Kabel einen ersten Verbundstecker (120) zum Einstecken in das Patchfeld (52) und einen ersten Verbund-Buchsensteckverbinder (100) zur Anordnung an dem Knotenpunkt (54) hat, wobei der erste Verbundstecker (120) mindestens zwei handelsübliche Stecker (122) hat, wobei jeder handelsübliche Stecker (122) ein Kommunikationssignal des Datenkanals empfängt, und der erste Verbund-Buchsensteckverbinder (100) mindestens zwei handelsübliche Buchsen (102) hat, wobei jede handelsübliche Buchse (102) mit einem dazugehörenden handelsüblichen Stecker (122) verbunden ist; und
einem zweiten Kabel (60) zur Weiterführung des Datenkanals vom Knotenpunkt (54) zum Computerarbeitsplatz (56), wobei das zweite Kabel (60) einen zweiten Verbundstecker hat, der identisch wie der erste Verbundstecker (120) und zum Einstecken in den ersten Verbund-Buchsensteckverbinder (100) konfiguriert ist, und einen zweiten Verbund-Buchsensteckverbinder, der identisch wie der erste Verbund-Buchsensteckverbinder (100) zur Anordnung an dem Computerarbeitsplatz (56) konfiguriert ist.

2. Bauzonen-Verdrahtungssystem nach Anspruch 1, wobei der zweite Verbund-Buchsensteckverbinder in einer Kabeltülle eingeschlossen ist, um den zweiten Verbund-Buchsensteckverbinder in einem Aufbau zu befestigen.

3. Bauzonen-Verdrahtungssystem nach Anspruch 1, wobei der Datenkanal drei Kommunikationssignale einschließt.

4. Bauzonen-Verdrahtungssystem nach Anspruch 1, wobei der erste Verbundstecker (120) und der zweite Verbundstecker drei handelsübliche Stecker (122) enthalten und jeder handelsübliche Stecker (122) ein dazugehöriges Kommunikationssignal empfängt.

5. Bauzonen-Verdrahtungssystem nach Anspruch 4, wobei der erste Verbund-Buchsensteckverbinder (100) und der zweite Verbund-Buchsensteckverbinder drei handelsübliche Buchsen (102) enthalten, wobei jede handelsübliche Buchse (102) mit einem dazugehörigen handelsüblichen Stecker (122) verbunden ist.

6. Bauzonen-Verdrahtungssystem nach Anspruch 5, wobei die drei handelsüblichen Stecker (122) des ersten Verbundsteckers (120) und des zweiten Verbundsteckers und die drei handelsüblichen Buchsen (102) des ersten Verbund-Buchsensteckverbinders (100) und des zweiten Verbund-Buchsensteckverbinders in einer vorgegebenen Konfiguration angeordnet sind.

7. Bauzonen-Verdrahtungssystem nach Anspruch 6, wobei jeder handelsübliche Stecker (122) mit jeder handelsüblichen Buchse (102) entfernbar verbindbar ist.

8. Bauzonen-Verdrahtungssystem nach Anspruch 1, wobei der Knotenpunkt (54) eine Bereichsverteilerbox ist, die so geformt ist, dass sie den ersten Verbund-Buchsensteckverbinder (100) und eine vorgegebene Anzahl weiterer Verbund-Buchsensteckverbinder aufnehmen kann, die im Wesentlichen identisch mit dem ersten Verbund-Buchsensteckverbinder (100) sind.

9. Bauzonen-Verdrahtungssystem nach Anspruch 8, wobei das Patchfeld (52) eine Vielzahl von Bereichsverteilerboxen einschließt.

10. Bauzonen-Verdrahtungssystem nach Anspruch 1, wobei das Patchfeld (52) eine vorgegebene Anzahl von Verbundbuchsen hat, um darüber die dazugehörigen Datenkanäle bereitzustellen, wobei der erste Verbundstecker (120) in jede der Verbundbuchsen einsteckbar ist.

11. Bauzonen-Verdrahtungssystem nach Anspruch 5, wobei die drei handelsüblichen Stecker (122) und die drei handelsüblichen Buchsen (102) in einer Reihenkonfiguration angeordnet sind.

12. Bauzonen-Verdrahtungssystem nach Anspruch 7, wobei jeder handelsübliche Stecker (122) eine Verriegelungslasche (124) zur Verriegelung in jeder handelsüblichen Buchse (102) aufweist.

13. Bauzonen-Verdrahtungssystem nach Anspruch 12, wobei der erste Verbundstecker (120) einen Entriegelungsknopf (128) einschließt, der so angeordnet ist, dass alle Verriegelungslaschen (124) gleichzeitig heruntergedrückt werden können.

14. Bauzonen-Verdrahtungssystem nach Anspruch 1, wobei mindestens zwei handelsübliche Stecker (122) des ersten und des zweiten Verbundsteckers identische Konfigurationen aufweisen, und mindestens zwei handelsübliche Buchsen (102) des ersten und des zweiten Verbund-Buchsensteckverbinders identische Konfigurationen aufweisen.

15. Bauzonen-Verdrahtungssystem nach Anspruch 1, wobei einer der mindestens zwei handelsüblichen Stecker (122) des ersten und des zweiten Verbundsteckers eine verschiedene Konfiguration gegenüber dem/den anderen der mindestens zwei handelsüblichen Stecker (122) aufweist, und eine der mindestens zwei handelsüblichen Buchsen (102) eine verschiedene Konfiguration gegenüber der/den anderen der mindestens zwei handelsüblichen Buchsen (102) aufweist.

16. Bauzonen-Verdrahtungssystem nach Anspruch 1, wobei jeder Verbundstecker ein Gehäuse (126) umfasst, um die mindestens zwei handelsüblichen Stecker teilweise darin einzuschließen.

17. Bauzonen-Verdrahtungssystem nach Anspruch 16, wobei jeder handelsübliche Stecker (122) eine Verriegelungslasche (124) zur Verriegelung in jeder handelsüblichen Buchse (102) aufweist und das Gehäuse (126) des ersten Verbundsteckers (120) einen Entriegelungsknopf (128) einschließt, der so angeordnet ist, dass alle Verriegelungslaschen gleichzeitig niedergedrückt werden können.

## Revendications

1. Système de câblage de zone de bâtiments destiné à assurer une liaison de données entre un panneau de connexion (52) ayant un canal de données et un poste de travail (56), comprenant :
un premier câble (58) destiné à connecter le canal de données avec un noeud (54), ledit câble ayant un premier connecteur composé mâle (120) destiné à s'enficher dans le panneau de connexion (52) et un premier connecteur composé femelle (100) destiné à se trouver sur le noeud (54), le premier connecteur composé mâle (120) comportant au moins deux prises mâles du commerce (122), chaque prise mâle du commerce (122) recevant un signal de communication du canal de données, et le premier connecteur composé femelle (100) comportant au moins deux prises femelles du commerce (102), chaque prise femelle du commerce (102) étant couplée à une prise mâle du commerce (122) correspondante ; et
un second câble (60) destiné à prolonger le canal de données depuis le noeud (54) jusqu'au poste de travail (56), le second câble (60) ayant un second connecteur composé mâle ayant une configuration identique à celle du premier connecteur composé mâle (120) et destiné à s'enficher dans le premier connecteur composé femelle (100), et un second connecteur composé femelle ayant une configuration identique à celle du premier connecteur composé femelle (100) et destiné à se trouver sur le poste de travail (56).

2. Système de câblage de bâtiment selon la revendication 1, dans lequel le second connecteur composé femelle loge dans un passe-fil destiné à fixer le second connecteur composé femelle dans une structure.

3. Système de câblage de bâtiment selon la revendication 1, dans lequel le canal de données comprend trois signaux de communication.

4. Système de câblage de bâtiment selon la revendication 1, dans lequel le premier connecteur composé mâle (120) et le second connecteur composé mâle comportent trois prises mâles du commerce (122), chaque prise mâle du commerce (122) recevant un signal de communication respectif.

5. Système de câblage de bâtiment selon la revendication 4, dans lequel le premier connecteur composé femelle (100) et le second connecteur composé femelle comportent trois prises femelles du commerce (102), chaque prise femelle du commerce (102) étant couplée à une prise mâle du commerce (120) correspondante.

6. Système de câblage de bâtiment selon la revendication 5, dans lequel les trois prises mâles du commerce (120) du premier connecteur composé mâle (120) et du second connecteur composé mâle, et les trois prises femelles du commerce (102) du premier connecteur composé femelle (100) et du second connecteur composé femelle sont agencées selon une configuration prédéfinie.

7. Système de câblage de bâtiment selon la revendication 6, dans lequel chaque prise mâle du commerce (122) peut être connectée de manière amovible à chaque prise femelle du commerce (102).

8. Système de câblage de bâtiment selon la revendication 1, dans lequel le noeud (54) est un boîtier de zone formé de manière à loger le premier connecteur composé femelle (100) et un nombre prédéterminé d'autres connecteurs composés femelles sensiblement identiques au premier connecteur composé femelle (100).

9. Système de câblage de bâtiment selon la revendication 8, dans lequel le panneau de connexion (52) comprend une pluralité de boîtiers de zone.

10. Système de câblage de bâtiment selon la revendication 1, dans lequel le panneau de connexion (52) comporte un nombre prédéterminé de prises composées femelles destinées à fournir des canaux respectifs à partir de celles-ci, le premier connecteur composé mâle (120) pouvant s'enficher dans l'une quelconque des prises composées femelles.

11. Système de câblage de bâtiment selon la revendication 5, dans lequel les trois prises mâles du commerce (122) et les trois prises femelles du commerce (102) sont agencées dans une configuration de rangée.

12. Système de câblage de bâtiment selon la revendication 7, dans lequel chaque prise mâle du commerce (122) comprend une patte de verrouillage (124) destinée à se mettre en prise avec chaque prise femelle du commerce (102).

13. Système de câblage de bâtiment selon la revendication 12, dans lequel le premier connecteur composé mâle (120) comprend un bouton de déblocage (128) placé de manière à appuyer simultanément sur chaque patte de verrouillage (124).

14. Système de câblage de bâtiment selon la revendication 1, dans lequel les au moins deux prises mâles du commerce (122) des premier et second connecteurs composés mâles ont des configurations identiques, et les au moins deux prises femelles du commerce (102) des premier et second connecteurs composés femelles ont des configurations identiques.

15. Système de câblage de bâtiment selon la revendication 1, dans lequel l'une des au moins deux prises mâles du commerce (122) des premier et second connecteurs composés mâles a une configuration différente de celle de l'autre des au moins deux prises mâles du commerce (122), et l'une des au moins deux prises femelles du commerce (102) a une configuration différente de celle de l'autre des au moins deux prises femelles du commerce (102).

16. Système de câblage de bâtiment selon la revendication 1, dans lequel chaque connecteur composé mâle comprend un boîtier (126) destiné à loger en partie les au moins deux prises mâles du commerce.

17. Système de câblage de bâtiment selon la revendication 16, dans lequel chaque prise mâle du commerce (122) comprend une patte de verrouillage (124) destinée à se mettre en prise avec chaque prise femelle du commerce (102) et le boîtier (126) du premier connecteur composé mâle (120) comprend un bouton de déblocage (128) placé de manière à appuyer simultanément sur chaque patte de verrouillage.
